# EUROPEAN PATENT APPLICATION

(11) **EP 1 609 762 A1**
(43) Date of publication of application: **28.12.2005**
(21) Application number: 05011505.4
(22) Date of filing: 27.05.2005
(51) Int. Cl.: C02F 3/28, C02F 3/12

(54) **Circulating sewage/waste water purification device**

(30) Priority: 29.05.2004 KR 2004038628
(71) Applicant: Kim, Sae Chang, Higashinari-Ku, Osaka (JP)
(72) Inventor: Kim, Sae Chang, Higashinari-Ku, Osaka (JP)
(74) Representative: Viering, Jentschura & Partner

(57) **Abstract**

Disclosed is a circulating sewage/waste water purification device that improves purification efficiency of a first septic tank, improves maintenance and purification efficiency of a second septic tank, and simply exchanges a sewage purification material filled in the second septic tank with a new one. The circulating sewage/waste water purification device includes a first septic tank purifying sewage/waste water supplied from a sewage/waste water source, a second septic tank filled with a sewage purification material to purify the sewage/waste water purified by the first septic tank, and a third septic tank finally purifying the water purified by the second septic tank, the purified water, which has passed through the third septic tank, being again supplied to the sewage/waste water source. The second septic tank is comprised of a plurality of unit septic tanks deposited, each including an outer cylinder portion provided with a plurality of air vents and a funnel shaped inner cylinder portion having an opened upper surface and a plurality of sewage/waste water through holes at the lower surface.

## Description

### BACKGROUND OF THE INVENTION

### Field of the Invention

The present invention relates to a circulating sewage/waste water purification device, and more particularly, to a circulating sewage/waste water purification device that recycles sewage/waste water supplied from a sewage/waste water source by means of microbiological decomposition, improves purification efficiency of a first septic tank, and improves maintenance and purification efficiency of a second septic tank.

### Discussion of the Related Art

Recently, with development of economy and industry, daily waste water and industrial waste water are rapidly increasing. Governments and related corporations in all the countries of the world have concentrated their efforts on development of a circulating sewage/waste water purification device to prevent environmental contamination caused by the waste water.

Various technologies related to the circulating sewage/waste water purification device have been already developed and used in actual life. As examples of the various technologies, there are provided the Korean Patent Application No. 2000-32344 titled "Sewage/Waste Water Purging Filtration Material and Method For Manufacturing The Same" and the Korean Patent No. 431222 titled "Circulating Sewage/Waste Water Purification Device", each being invented in the name of the applicant of the present invention.

The above circulating sewage/waste water purification device includes a first septic.tank 10 purging sewage/waste water supplied from a sewage/waste water source 50, a second septic tank 20 filled with a filtration material to purge the sewage/waste water purified by the first septic tank 10, and a filter 30 (third septic tank) purging the water purified by the second septic tank 20.

The first septic tank 10 includes a pulverizer C and a triggering device 11. The filtration material filled in the second septic tank has water contents of 100% or greater. This is to obtain porosity so as to provide optimal conditions required to allow microbes to live. A wooden chip having a diameter of 20mm or so, such as a Japanese cedar or a black oak, is used as the filtration material.

The second septic tank filled with the filtration material is formed of a cylinder tank sealed in a single body. The second septic tank is provided with at least two or more air supply pipe 21 and sewage/waste water supply pipe 22.

The related art circulating sewage/waste water purification device constructed as above is configured to perform primary purification in such a manner that food waste (hereinafter, referred to as "solid") mingled in feces from human and livestock and daily waste water is pulverized by a pulverizer C provided in the first septic tank 10 if the sewage/waste water from the sewage/waster water source (feces and urine from a toilet bowl, feces and urine from livestock, and daily waste water generated from homes and restaurants) is supplied to the first septic tank 10, and the sewage/waste water containing the pulverized solid is triggered by the triggering device 11 of the first septic tank 10 to undergo settlement. The sediment is fermented by action of a well-known fermentable microbe injected into the first septic tank 10.

The primarily purified sewage/waste water is supplied to the second septic tank 20 filled with the filtration material through a transfer line 12 and the sewage/waste water supply pipe 22 by action of a pump P connected with the first septic tank 10 through a pipe. Oxygen in the air is supplied into the second septic tank through a plurality of air supply pipes 21 diverged from an air line 23.

The reason why oxygen is supplied into the second septic tank 20 is to change the sewage/waste water from the anaerobic sewage/waste water to the aerobic sewage/waste water. The aerobic microbe acts superiorly to the anaerobic microbe due to ample supply of oxygen. As a result, the sewage/waste water is sufficiently purified by mutual action between the anaerobic microbe and the aerobic microbe while undergoing the first septic tank 10 and the second septic tank 20.

The water purified by the second septic tank 20 is supplied to the filter 30 of active carbon through a pipe 31. The filter 30 adsorbs smell of the purified water when the purified water is supplied thereto. Also, coloring matters and residual organic and inorganic components that are not purified by the second septic tank are adsorbed onto the filter to recycle the water for cleaning. The finally purified water is stored in a storage tank 40.

The finally purified water stored in the storage tank 40 is supplied to a water tank 51 connected with a sewage/waste water source 50 (toilet bowl and urinal), or is ejected out if the water stored in the water tank 51 is sufficient.

However, the related art circulating sewage/waste water purification device has several problems. If a sewage purification material filled in the second septic tank is stopped or malfunctioned due to long use, it is difficult to exchange the sewage purification material with a new one due to great volume of the second septic tank. Activity of the aerobic microbe degrades as oxygen is not uniformly supplied into the second septic tank.

Furthermore, if the circulating sewage/waste water purification device is provided at a place with high frequency of use, the primary purification is not sufficiently performed in a short time due to limited volume of the first septic tank. Some of the sewage/waste water may flow into the second septic tank and the third septic tank without being purified by the first septic tank. This could lead to degradation of purification efficiency.

### SUMMARY OF THE INVENTION

The present invention is directed to a circulating sewage/waste water purification device that substantially obviates one or more of the problems due to limitations and disadvantages of the related art.

A circulating sewage/waste water purification device according to the present invention includes a first septic tank purifying sewage/waste water supplied from a sewage/waste water source, a multi-staged second septic tank filled with a sewage purification material such as wooden chip or ceramic to purify the sewage/waste water purified by the first septic tank, and a third septic tank finally purifying the water purified by the second septic tank, the purified water, which has passed through the third septic tank, being again supplied to the sewage/waste water source.

Particularly, the first septic tank includes a plurality of anaerobic tanks, a triggering tank, and a settling tank, and at least one anaerobic tank among the anaerobic tanks and the triggering tank are provided with negative and positive electrode terminals, to which a power source of 5V to 24V and a current of 1A to 2A are applied, so as to activate microbes in the anaerobic tank and the triggering tank and expedite an oxidation-reduction reaction of ionized sewage/waste water, thereby improving biodegradation of the sewage/waste water.

A sewage/waste water circulating device that circulates the sewage/waste water between the anaerobic tanks and the triggering tank is provided to activate the oxidation-reduction reaction of the sewage/waste water.

The multi-staged second septic tank is comprised of a plurality of unit septic tanks deposited, each including an outer cylinder portion provided with a plurality of air vents and a funnel shaped inner cylinder portion having an opened upper surface and a plurality of sewage/waste water through holes at the lower surface.

In this way, since the second septic tank is comprised of the unit septic tanks deposited in a multi-stage, oxygen can desirably be supplied to the sewage purification material in the second septic tank and it is possible to facilitate maintenance of the second septic tank and easily exchange the sewage purification material with a new one. Also, it is possible to prevent the sewage from being leaked out through air vents even if the air vents are provided in the outer cylinder portion.

Accordingly, an object of the present invention is to provide a circulating sewage/waste water purification device that improves purification efficiency.

Another object of the present invention is to provide a circulating sewage/waste water purification device that can simply exchange a sewage purification material (wooden chip, ceramic, and etc.) filled in a second septic tank with a new one.

Other object of the present invention is to provide a circulating sewage/waste water purification device that facilitates maintenance of a second septic tank.

Additional features and advantages of the invention will be set forth in the description which follows, and in part will be apparent from the description, or may be learned by practice of the invention. The objectives and other advantages of the invention will be realized and attained by the scheme particularly pointed out in the written description and claims hereof as well as the appended drawings.

To achieve these and other advantages and in accordance with the purpose of the present invention, as embodied and broadly described, a circulating sewage/waste water purification device according to the present invention includes a first septic tank purifying sewage/waste water supplied from a sewage/waste water source, a second septic tank filled with a sewage purification material to purify the sewage/waste water purified by the first septic tank, and a third septic tank finally purifying the water purified by the second septic tank, the purified water, which has passed through the third septic tank, being again supplied to the sewage/waste water source, wherein the second septic tank is comprised of a plurality of unit septic tanks deposited, each including an outer cylinder portion provided with a plurality of air vents and a funnel shaped inner cylinder portion having an opened upper surface and a plurality of sewage/waste water through holes at the lower surface.

The first septic tank includes a plurality of anaerobic tanks, a triggering tank, and a settling tank, and at least one anaerobic tank among the anaerobic tanks and the triggering tank are provided with negative and positive electrode terminals to which a power source of 5V to 24V is applied.

The first septic tank includes a sewage/waste water circulating device that circulates the sewage/waste water between the anaerobic tanks and the triggering tank.

The outer cylinder portion and the inner cylinder portion of the unit septic tank are provided in a single body or detachably provided.

The inner cylinder portion of the unit septic tank is provided with a plurality of air supply pipes extended from a corner portion at an upper end of the inner cylinder portion to an inner side of the inner cylinder portion by a certain length, the air supply pipes communicating with the air vents formed in the outer cylinder portion of the unit septic tank.

The funnel shaped inner cylinder portion of the unit septic tank and the anaerobic tanks and the triggering tank of the first septic tank are filled with a sewage purification material made of a wooden chip, a special plastic sponge, or a far infrared ray emitting material.

It is to be understood that both the foregoing general description and the following detailed description are exemplary and explanatory and are intended to provide further explanation of the invention as claimed.

### BRIEF DESCRIPTION OF THE ATTACHED DRAWINGS

The invention will be described in detail with reference to the following drawings in which like reference numerals refer to like elements wherein:
FIG. 1 illustrates a structure of a related art circulating sewage/waste water purification device;
FIG. 2 illustrates a structure of a circulating sewage/waste water purification device according to the present invention;
FIG. 3 is an elevational view illustrating a first septic tank of a circulating sewage/waste water purification device according to the present invention;
FIG. 4 is an elevational view illustrating a second septic tank of a circulating sewage/waste water purification device according to one embodiment of the present invention;
FIG. 5 is a sectional view of FIG. 4;
FIG. 6 is an exploded perspective view of FIG. 5;
FIG. 7 is an exploded perspective view illustrating a second septic tank of a circulating sewage/waste water purification device according to another embodiment of the present invention; and
FIG. 8 is an exploded perspective view illustrating a second septic tank of a circulating sewage/waste water purification device according to other embodiment of the present invention.

### DETAILED DESCRIPTION OF THE PREFERRED EMBODIMENTS

Reference will now be made in detail to the preferred embodiments of the present invention, examples of which are illustrated in the accompanying drawings.

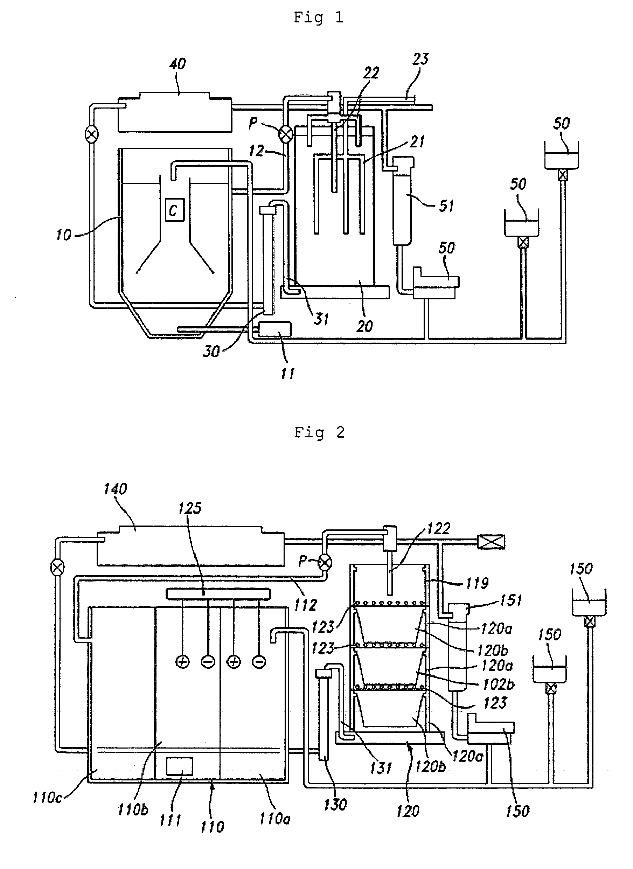

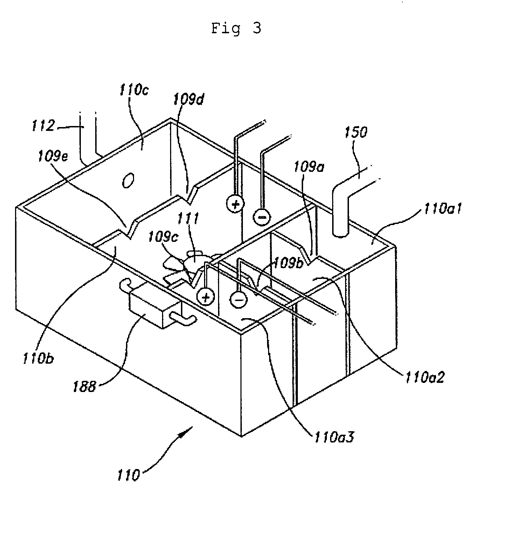

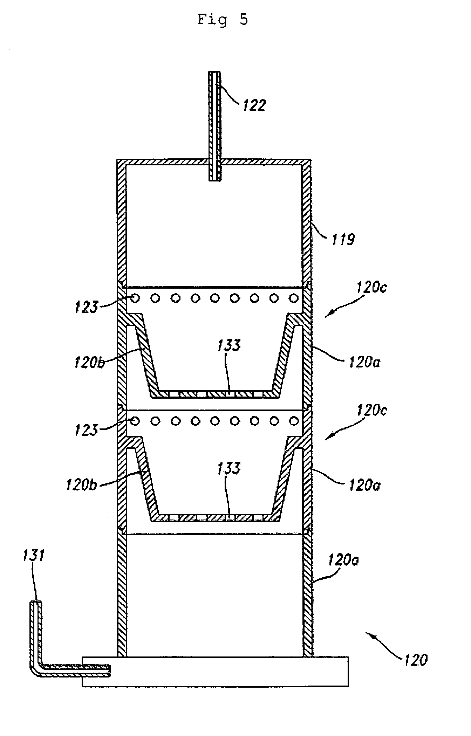

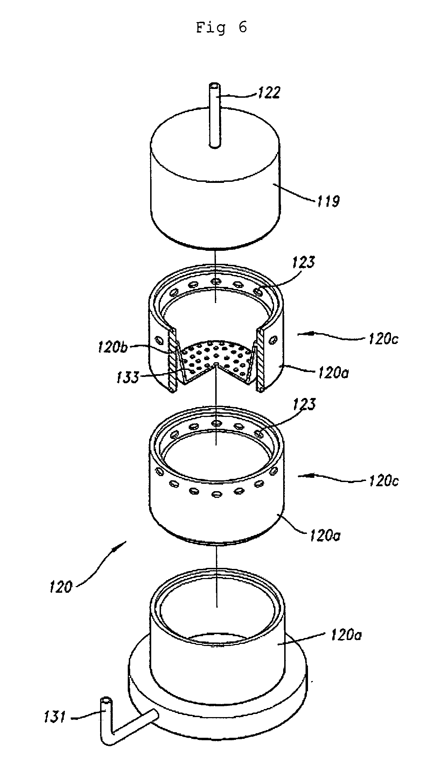

A circulating sewage/waste water purification device according to the present invention will be described with reference to FIG. 2 to FIG. 8.

The circulating sewage/waste water purification device includes a first septic tank 110 purging sewage/waste water supplied from a sewage/waste water source 150, a second septic tank 120 filled with a sewage purification material to purge the sewage/waste water purified by the first septic tank 110, and a third septic tank 130 (filter) purging the water purified by the second septic tank 120.

The first septic tank 110 includes a first anaerobic tank 110a1, a second anaerobic tank 110a2, a third anaerobic tank 110b, a triggering tank 110b, and a settling tank 110c. A voltage of DC 5V-24V and a current of 1-2A are applied to the third anaerobic tank 110a3 and the triggering tank 110b by negative and positive electrode terminals provided in a power supply device 125.

The power source applied to the sewage/waste water serves to stimulate aerobic and anaerobic microbes to activate the microbes. The power source also serves to activate H₂O molecules of sewage from multiple molecules constituting a cluster to a single molecule. Further, the power source serves to decompose ionized contaminants in the sewage/waste water under an oxidation-reduction reaction using negative electrode and positive electrode. It was experimentally noted that decomposition of the sewage/waste water was improved by 20% to 30% when the voltage of DC 5V-24V and the current of 1-2A were respectively applied to the triggering tank and the third anaerobic tank through the electrode terminals.

The triggering tank is provided with a triggering device 111 enabling air injection. A sewage/waste water circulating device 188 is provided to circulate sewage between the triggering tank 110b and the anaerobic tank 110a3. The sewage/waste water circulating device 188 is designed to forcibly circulate the sewage using a motor pump or an air pump.

Ore having high emission ratio of far infrared rays, such as mica, and a well-known sewage purification material (not shown) are filled in the first septic tank 110.

The negative and positive electrode terminals provided in the triggering tank 110b and the third anaerobic tank 110a3, the sewage/waste water circulating device 188, and the sewage purification material act to expedite the oxidation-reduction reaction of the sewage/waste water. Particularly, the sewage/waste water circulating device 188 acts to expedite decomposition of nitrogen feces.

The sewage purification material filled in each anaerobic tank of the first septic tank superiorly proliferates anaerobic microbes to anaerobically decompose organic matters in each anaerobic tank. The sewage purification material filled in the triggering tank superiorly proliferates aerobic microbes to aerobically decompose the sewage into aerobic microbes, ferments the decomposed sewage, and transfers the sewage to the settling tank 110c for settlement.

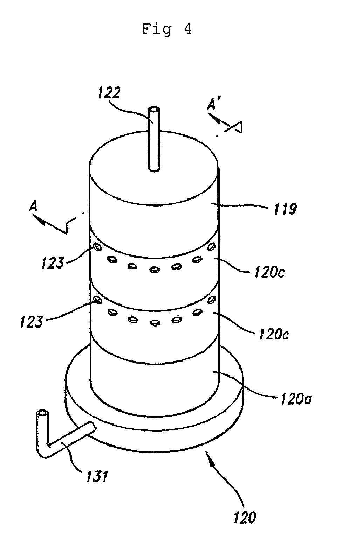

As shown in FIG. 4 to FIG. 6, the second septic tank 120 is comprised of a plurality of unit septic tanks 120c deposited in a single body, each unit septic tank having an outer cylinder portion 120a and an inner cylinder portion 120b formed with a funnel shape inside the outer cylinder portion 120a. The outer cylinder portion 120a of the unit septic tank is provided with a plurality of air vents 123 formed along a circumferential direction. The uppermost outer cylinder portion 120a is configured to open and close using a switch cover 119.

A plurality of sewage/waste water through holes 133 are formed at the bottom of the inner cylinder portion 120b so that the sewage filtered by a sewage purification material (not shown) such as wooden chip, ceramic and the like filled in the inner cylinder portion can freely drop to the center portion of the lower unit septic tank.

The sewage purification material filled in the second septic tank is made of a porous wooden chip having a diameter of 20mm or so, such as a Japanese cedar or a black oak, ceramic, a special plastic sponge, and so forth.

Aerobic microbes are actively proliferated on the porous surface of the sewage purification material because of active contact with air. By contrast, anaerobic microbes are actively proliferated inside the porous purification material because it is difficult to contact with air. As a result, aerobic and anaerobic decomposition of the sewage is activated.

Meanwhile, the lowest outer cylinder portion 120a connected with the pipe 131 has a sealed tank shape to transfer the sewage stored therein to the third septic tank 130.

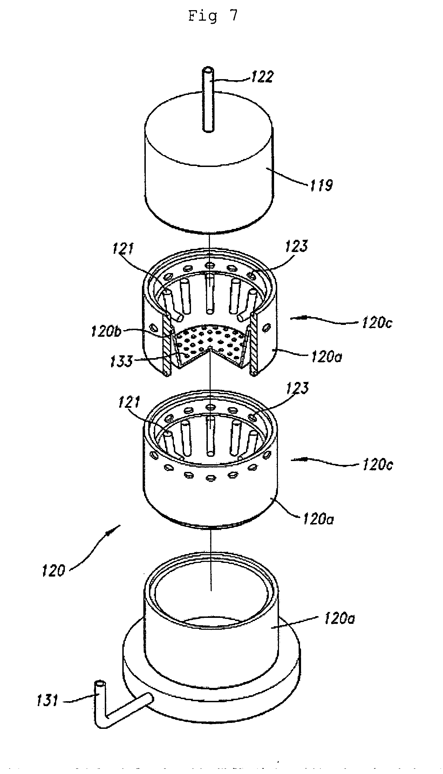

Another example of the second septic tank according to the present invention will be described with reference to FIG. 7.

As shown in FIG. 7, a unit septic tank 120c is comprised of an outer cylinder portion 120a and an inner cylinder portion 120b. The outer cylinder portion 120a and the inner cylinder portion 120b are formed in a single body. A plurality of air supply pipes 121 connected with air vents 123 of the outer cylinder portion are provided inside the inner cylinder portion of the unit septic tank 120c. Some of the air supply pipes 121 are tightly adhered to the inner surface of the inner cylinder portion. The other of the air supply pipes 121 are extended along the inner surface of the inner cylinder portion, curved at the end, and extended toward the center. Therefore, air can uniformly be supplied into the inner cylinder portion.

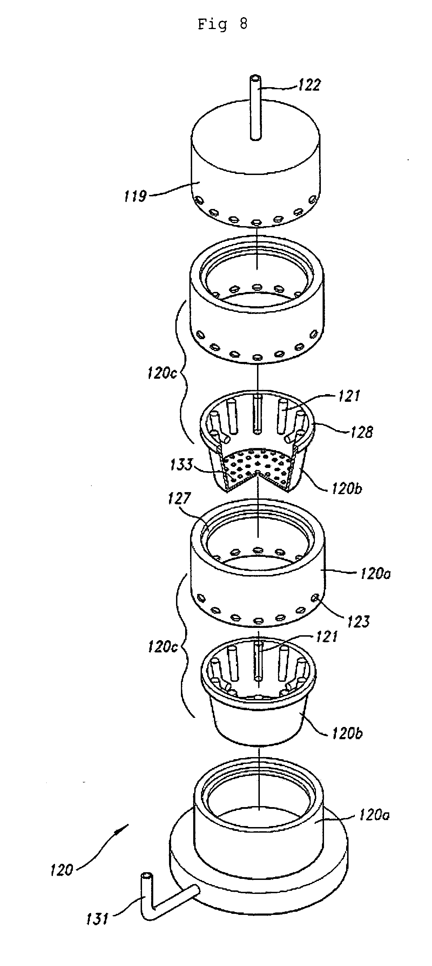

Other example of the second septic tank according to the present invention will be described with reference to FIG. 8.

As shown in FIG. 8, a unit septic tank 120c is comprised of an outer cylinder portion 120a and an inner cylinder portion 120b that are detachably assembled.

In other words, the outer cylinder portion 120a is provided with a plurality of air vents 123 formed at the lower portion along a circumferential direction. A flange 127 is provided at the inner side of the outer cylinder portion 120a.

The inner cylinder portion 120b detachably fixed to the inside of the outer cylinder portion has a funnel shape tapered from the opened upper portion to the lower portion. A plurality of air supply pipes 121 connected with the air vents of the outer cylinder portion are provided inside the inner cylinder portion 120b. Some of the air supply pipes 121 are tightly adhered to the inner surface of the inner cylinder portion. The other of the air supply pipes 121 are extended along the inner surface of the inner cylinder portion, curved at the end, and extended toward the center. Therefore, air can uniformly be supplied into the inner cylinder portion.

The outer cylinder portion 120a and the inner cylinder portion 120b detachably constructed as above are fixed to each other so that a clamp portion 128 projected at the upper end of the inner cylinder portion can be caught in a flange 127 provided inside the outer cylinder portion, thereby constituting the unit septic tank 120c.

Although the unit septic tank of FIG. 8 is provided with the air supply pipes 121 formed in the inner cylinder portion 120b, the air supply pipes may be omitted.

Hereinafter, the operation of the circulating sewage/waste water purification device comprised of the first septic tank 110, the second septic tank 120, and the third septic tank 130 will be described in detail.

If the sewage/waste water transferred from the sewage/waste water source 150 (feces and urine from a toilet bowl, feces and urine from livestock, and daily waste water generated from homes and restaurants) is supplied to the first anaerobic tank 110a1 of the first septic tank 110, solid, which is hardly decomposable, mixed in the sewage/waste water is settled for separation, and the organic matters is anaerobically decomposed by the anaerobic microbes proliferated in the sewage purification material provided in the first anaerobic tank.

The primarily and anaerobically decomposed sewage/waste water is transferred to the second anaerobic tank 110a2 through an overflow 109a, and secondarily and anaerobically decomposed in the second anaerobic tank.

The secondarily and anaerobically decomposed sewage/waste water is transferred to the third anaerobic tank 110a3 through an overflow 109b. The sewage transferred to the third anaerobic tank 110a3 undergoes the oxidation-reduction reaction by way of the negative and positive electrode terminals applied with the power source from the power supply device 125 and the anaerobic microbes in the third anaerobic tank 110a3. Thus, anaerobic decomposition of the sewage is activated to perform purification action.

The sewage anaerobically decomposed by the third anaerobic tank 110a3 is transferred to the triggering tank 110b through an overflow 109c. The sewage transferred to the triggering tank 110b is triggered by the triggering device 111 and undergoes the oxygen-reduction reaction by way of the negative and positive electrode terminals provided in the triggering device and the aerobic microbes proliferated in the sewage purification material to expedite aerobic decomposition.

Further, the sewage in the triggering tank 110b and the third anaerobic tank 110a3 is forcibly circulated by the sewage/waste water circulating device 188 to activate the oxidation-reduction reaction, the aerobic decomposition, and the anaerobic decomposition.

The sewage triggered by the triggering device 111 is transferred to the settling tank 110c through overflows 109d and 109e and settled there. Thus, the primary purification is completed. The sediments are periodically and automatically transferred to the anaerobic tank.

The primarily purified sewage/waste water is transferred to the second septic tank 120 filled with the sewage purification material through the transfer line 211 and the sewage/waste water supply pipe 122 by action of the pump P connected with the first septic tank 110 through a pipe.

The sewage/waste water transferred to the second septic tank 120 is purified by sequentially passing through the multi-staged inner cylinder portions 120b filled with the sewage purification material. Then, the purified water is stored in the sealed outer cylinder portion 120a at the lower portion.

Since the inner cylinder portions 120b are deposited to have a funnel shape, the sewage/waste water is not leaked out through the air vents 123 formed outside the outer cylinder portions 120a.

Furthermore, oxygen can sufficiently be supplied to the sewage purification material through the air supply pipes 121 provided in the inner cylinder portions 120b. The inner and outer cylinder portions deposited in a single body are simply detached from each other to facilitate maintenance.

If the sewage/waste water is purified by the second septic tank 120 constructed as above, the purified water is supplied to the filter 130 (third septic tank) through the pipe 131. The filter 130 is mainly made of active carbon. The filter 130 adsorbs smell of the purified water when the purified water passes through the filter 130. Also, coloring matters and residual organic and inorganic components that are not purified by the second septic tank 120 are adsorbed onto the filter to finally purify the water for recycling. The finally purified water is stored in a storage tank 140.

The finally purified water stored in the storage tank 140 is supplied to a water tank 151 connected with the sewage/waste water source 150 (toilet bowl and urinal), or is ejected out if the water stored in the water tank 151 is sufficient.

As aforementioned, the circulating sewage/waste water purification device according to the present invention has the following advantages.

The second septic tank of the circulating sewage/waste water purification device is comprised of the unit septic tanks deposited, each septic tank having the outer cylinder portion provided with air vents and the funnel shaped inner cylinder portion provided inside the outer cylinder portion, the inner cylinder portion having the opened upper surface and the plurality of sewage/waste water through holes at the lower surface. The electrode terminals are provided to apply predetermined voltage and current to the circulating anaerobic tank and the triggering tank. In this way, purification efficiency of the sewage/waste water can be maximized.

Particularly, since the second septic tank is comprised of the unit septic tanks deposited by a predetermined number, it is possible to prevent the sewage from being leaked out, facilitate maintenance of the second septic tank, and easily exchange the sewage purification material with a new one.

In addition, since the second septic tank can sufficiently be supplied with oxygen, it is possible to obtain high biodegradation efficiency of the sewage/waste water.

The foregoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. A circulating sewage/waste water purification device comprising:
a first septic tank purifying sewage/waste water supplied from a sewage/waste water source;
a second septic tank filled with a sewage purification material to purify the sewage/waste water purified by the first septic tank; and
a third septic tank finally purifying the water purified by the second septic tank, the purified water, which has passed through the third septic tank, being again supplied to the sewage/waste water source,
wherein the second septic tank is comprised of a plurality of unit septic tanks deposited, each including an outer cylinder portion provided with a plurality of air vents and a funnel shaped inner cylinder portion having an opened upper surface and a plurality of sewage/waste water through holes at the lower surface.

2. The circulating sewage/waste water purification device according to claim 1, wherein the first septic tank includes a plurality of anaerobic tanks, a triggering tank, and a settling tank, and at least one anaerobic tank among the anaerobic tanks and the triggering tank are provided with negative and positive electrode terminals to which a power source of 5V to 24V is applied.

3. The circulating sewage/waste water purification device according to claim 2, wherein the first septic tank includes a sewage/waste water circulating device that circulates the sewage/waste water between the anaerobic tanks and the triggering tank.

4. The circulating sewage/waste water purification device according to any one of claim 1 to claim 3, wherein the outer cylinder portion and the inner cylinder portion of the unit septic tank are provided in a single body or detachably provided.

5. The circulating sewage/waste water purification device according to claim 4, wherein the inner cylinder portion of the unit septic tank is provided with a plurality of air supply pipes extended from a corner portion at an upper end of the inner cylinder portion to an inner side of the inner cylinder portion by a certain length, the air supply pipes communicating with the air vents formed in the outer cylinder portion of the unit septic tank.

6. The circulating sewage/waste water purification device according to any one of claim 1 to claim 3, wherein the funnel shaped inner cylinder portion of the unit septic tank and the anaerobic tanks and the triggering tank of the first septic tank are filled with a sewage purification material.

7. The circulating sewage/waste water purification device according to claim 6, wherein the sewage purification material is made of at least one selected from a wooden chip, a plastic sponge, and a far infrared ray emitting material.

8. The circulating sewage/waste water purification device according to claim 7, wherein the wooden chip is made of a Japanese cedar or a black oak, and the far infrared ray emitting material is made of mica or ceramic.
